Europäisches Patentamt

European Patent Office

Office européen des brevets

(11) Veröffentlichungsnummer: **0 285 091**
**A1**

# (12) EUROPÄISCHE PATENTANMELDUNG

(21) Anmeldenummer: 88105068.6

(22) Anmeldetag: 29.03.88

(51) Int. Cl.⁴: **C08G 77/38 , C08G 77/06**

(30) Priorität: 03.04.87 DE 3711214

(43) Veröffentlichungstag der Anmeldung:
05.10.88 Patentblatt 88/40

(84) Benannte Vertragsstaaten:
**BE DE FR GB IT NL**

(71) Anmelder: **WACKER-CHEMIE GMBH**
**Prinzregentenstrasse 22**
**D-8000 München 22(DE)**

(72) Erfinder: **Burkhardt, Jürgen, Dr. Dipl.-Chem.**
**Isenbreite 25**
**D-8261 Winhöring(DE)**
Erfinder: **Böck, Andreas**
**Kastlerstrasse 13**
**D-8261 Emmerting(DE)**

(54) **Verfahren zur Herstellung von Diorganopolysiloxanen mit Triorganosiloxygruppen als endständige Einheiten.**

(57) Diorganopolysiloxane mit Triorganosiloxygruppen als endständigen Einheiten werden dadurch hergestellt, daß die gegebenenfalls bereits Triorganosiloxygruppen aufweisenden Diorganopolysiloxane, nachdem sie durch Kondensation und/oder Äquilibrierung in Gegenwart von anderen Katalysatoren als Phosphornitridchlorid die gewünschte durchschnittliche Viskosität erreicht haben, mit Hexaorganodisilazan in Mengen von 0,05 bis 2 Gewichtsprozent, bezogen auf das Gewicht der jeweils eingesetzten Menge an Diorganopolysiloxan, vermischt werden und nach diesem Vermischen als Katalysator für die Umsetzung Phosphornitridchlorid zugegeben wird.

EP 0 285 091 A1

## Verfahren zur Herstellung von Diorganopolysiloxanen mit Triorganosiloxygruppen als endständigen Einheiten

Die Erfindung betrifft die Herstellung von Diorganopolysiloxanen mit Triorganosiloxygruppen als endständigen Einheiten, die in besonders hohem Ausmaß frei von Si-gebundenen Hydroxylgruppen oder von mit solchen Hydroxylgruppen kondensationsfähigen Gruppen sind, aus gegebenenfalls bereits Triorganosiloxygruppen aufweisenden Diorganopolysiloxan und Hexaorganodisilazan in Gegenwart von Phosphornitridchlorid.

Die Herstellung von Triorganosiloxygruppen als endständige Einheiten aufweisenden Diorganopolysiloxanen erfolgt meist durch Äquilibrieren von cyclischen und/oder linearen Organopolysiloxanen mit Triorganosilanolen bzw. niedermolekularen, Triorganosiloxygruppen enthaltenden Organosiloxanen. Solche Triorganosiloxygruppen als endständige Einheiten aufweisenden Diorganopolysiloxane werden beispielsweise für die Vernetzung, also Härtung oder Vulkanisation, zu für die Herstellung von Elastomeren verwendet. Bei der Herstellung von Triorganosiloxygruppen als endständige Einheiten aufweisenden Diorganopolysiloxanen durch Äquilibrieren von cyclischen und/oder linearen Organopolysiloxanen mit Triorganosilanolen bzw. niedermolekularen, Triorganosiloxygruppen enthaltenden Organosiloxanen werden aber stets Produkte enthalten, in denen nicht bei jedem linearen Organopolysiloxanmolekül beide endständige Einheiten Triorganosiloxygruppen sind. Dies hat beispielsweise zur Folge, daß solche Diorganopolysiloxane durch einen, wenn auch geringen Gehalt an Si-gebundenen Hydroxylgruppen oder mit solchen Gruppen kondensationsfähigen Gruppen mit verstärkenden Füllstoffen, wie sie häufig bei der Herstellung von Elastomeren mitverwendet werden, Gemische ergeben, die bei Lagern vor der endgültigen Formgebung und Härtung zum Elastomeren hart bzw. steif werden können, also ein nachteiliges Verhalten aufweisen, das z.B. als "Verstrammung" oder "Strukturbildung" bezeichnet wird. Ein solch nachteiliges Verhalten kann beispielsweise vermieden werden, wenn die noch vorhandenen Si-gebundenen Hydroxylgruppen in Triorganosiloxygruppen überführt werden.

Die Umsetzung von Si-gebundenen Hydroxylgruppen zu Triorganosiloxygruppen mittels N-alkyl-substituierten Silylaminen ist bekannt. Hierzu sei beispielsweise auf US 3 133 110 (ausgegeben 12. Mai 1964, E.L. Morehouse et al., Union Carbide Corporation) verwiesen.

Aus DE-OS 35 24 484 offengelegt 15 Januar 1987, J. Burkhardt, Wacker-Chemie GmbH, (entsprechend US-SN 874,330) ist bekannt, aus linearem, in den endständigen Einheiten je eine Si-gebundene Hydroxylgruppe enthaltendem Organopolysiloxan, das durch Kondensation in Gegenwart von Phosphornitridchlorid hergestellt wurde, durch Umsetzung mit Hexaorganodisilazan lineare Organopolysiloxane mit Triorganosiloxygruppen als endständige Einheiten herzustellen.

Es bestand die Aufgabe, ein Verfahren zur Herstellung von Diorganopolysiloxanen mit Triorganosiloxygruppen als endständigen Einheiten aus gegebenenfalls bereits Triorganosiloxygruppen aufweisenden Diorganopolysiloxanen, nachdem sie durch Kondensation und/oder Äquilibrierung in Gegenwart von anderen Katalysatoren als Phosphornitridchlorid die gewünschte durchschnittliche Viskosität erreicht haben, und Hexaorganodisilazan in Gegenwart von Phosphornitridchlorid bereitzustellen, bei dem Diorganopolysiloxane erhalten werden, die in besonders hohem Ausmaß frei von Si-gebundenen Hydroxylgruppen oder von mit solchen Hydroxylgruppen kondensationsfähige Gruppen sind, bei dem das verhältnismäßig wenig aufwendig herzustellende Hexaorganodisilazan ohne einen weiteren Stoff verwendet wird, die Menge an einzusetzendem Hexaorganodisilazan sehr gering sein kann, kein zusätzliches Mittel zum Unwirksammachen von Phosphornitridchlorid erforderlich ist und die eingesetzten Diorganopolysiloxane mittels Phosphornitridchlorid keine weiteren Viskositätsänderungen durch Kondensation und/oder Äquilibrierung erfahren. Diese Aufgabe wird durch die Erfindung gelöst.

Weiterhin bestand die Aufgabe ein Verfahren zur Herstellung von Diorganopolysiloxanen mit Triorganosiloxygruppen als endständigen Einheiten aus gegebenenfalls bereits Triorganosiloxygruppen aufweisenden Diorganopolysiloxanen, nachdem sie durch Kondensation und/oder Äquilibrierung in Gegenwart von anderen Katalysatoren als Phosphornitridchlorid die gewünschte durchschnittliche Viskosität erreicht haben, und Hexaorganodisilazan in Gegenwart von Phosphornitridchlorid bereitzustellen, das Diorganopolysiloxane liefert, die eine besonders hohe Wärmebeständigkeit aufweisen, in besonders hohem Ausmaß physiologisch unbedenklich sind und sich auch bei Temperaturen über 150°C nicht verfärben. Auch diese Aufgabe wird durch die Erfindung gelöst.

Gegenstand der Erfindung ist ein Verfahren zur Herstellung von Diorganopolysiloxanen mit Triorganosiloxygruppen als endständigen Einheiten aus gegebenenfalls bereits Triorganosiloxygruppen aufweisenden Diorganopolysiloxanen und Hexaorganodisilazan in Gegenwart von Phosphornitridchlorid, dadurch gekennzeichnet, daß die gegebenenfalls Triorganosiloxygruppen aufweisenden Diorganopolysiloxane, nachdem sie durch Kondensation und/oder Äquilibrierung in Gegenwart von anderen Katalysatoren als Phosphornitridchlorid die gewünschte durchschnittliche Viskosität erreicht haben, mit Hexaorganodisilazan in Mengen von 0,05 bis 2 Gew.-%, bezogen auf das Gewicht der jeweils eingesetzten Menge an Diorganopolysiloxan, vermischt werden und nach diesem Vermischen als Katalysator für die Umsetzung Phosphornitridchlorid zugegeben wird.

Als Diorganopolysiloxane für die Umsetzung mit Hexaorganodisilazanen werden wegen der leichteren Zugänglichkeit vorzugsweise solche verwendet, die, wie beispielsweise bei der Herstellung von für die Weiterverarbeitung zu Elastomeren bestimmten Diorganopolysiloxanen meist üblich, durch Polymerisation von cyclischen Diorganopolysiloxanen der allgemeinen Formel

$$(R_2SiO)_m ,$$

worin R ein einwertiger, gegebenenfalls substituierter Kohlenwasserstoffrest und m eine ganze Zahl im Wert von mindestens 3, vorzugsweise 3 bis 9 ist und/oder Kondensation von Silanolen bzw. Siloxanolen der allgemeinen Formel

$$HO(SiR_2O)_nH ,$$

worin R die oben dafür angegebene Bedeutung hat und n eine ganze Zahl im Wert von mindestens 1 ist, mittels Katalysatoren, die zumindest in Gegenwart von Si-gebundenen Hydroxylgruppen nicht nur die Kondensation dieser Hydroxylgruppen, sondern auch die Äquilibrierung fördern, hergestellt worden sind.

Um möglichst wenig Hexaorganodisilazan zu benötigen, ist es besonders bevorzugt, für die Umsetzung mit Hexaorganodisilazan bereits Triorganosiloxygruppen enthaltende Diorganopolysiloxane zu verwenden. Dazu werden bei der oben beschriebenen Polymerisation und/oder Kondensation die verhältnismäßig leicht zugänglichen Triorganosilanole bzw. niedermolekularen, Diorganosiloxygruppen enthaltenden Organosiloxane der allgemeinen Formel

$$R_3SiOH \text{ bzw. } R_3Si(OSiR_2)_pOSiR_3 ,$$

mitverwendet, wobei in diesen Formeln R jeweils die oben dafür angegebene Bedeutung hat und p 0 oder eine ganze Zahl im Wert von 1 bis 20 ist.

Obwohl durch die obige, häufig verwendete Formel

$$HO(SiR_2O)_nH ,$$

in der R und n die oben dafür angegebene Bedeutung haben, nicht dargestellt, können bis zu insgesamt 5 Mol.-% der Diorganosiloxaneinheiten durch andere, meist jedoch lediglich als mehr oder weniger schwer vermeidbare Verunreinigungen vorliegende Siloxaneinheiten, wie Monoorgano-und/oder $SiO_{4/2}$-Einheiten, ersetzt sein.

Die wohl wichtigsten Beispiele für Triorganosiloxygruppen in den bei dem erfindungsgemäßen Verfahren eingesetzten Triorganosiloxygruppen als endständige Einheiten aufweisenden Diorganopolysiloxanen und für die Gruppierung $R_3SiO$ in den oben genannten Formeln bzw. die wohl wichtigsten Beispiele für die Triorganosilylgruppen in den Hexaorganodisilazanen, sind Trimethylsiloxy-und Vinyldimethylsiloxy-bzw. Trimethylsilyl-bzw. Vinyldimethylsilylgruppen. Da für die Umsetzung mit Hexaorganodisilazan Diorganopolysiloxane, die gegebenenfalls bereits Triorganosiloxygruppen als endständige Einheiten besitzen, verwendet werden, ist es zweckmäßig, wenn in beiden Reaktionsteilnehmern die Triorganosilylgruppen ($R_3Si$) die gleichen sind.

Als Katalysatoren, die zumindest in Gegenwart von Si-gebundenen Hydroxylgruppen nicht nur die Kondensation dieser Hydroxylgruppen sondern auch die Umlagerung von Siloxanbindungen fördern, können alle bisher dafür bekannten Katalysatoren, mit der Maßgabe, daß dabei Phosphornitridchlorid ausgeschlossen bleibt, verwendet werden. Beispiele für saure Katalysatoren sind Schwefelsäure, Phosphorsäure, Trifluormethansulfonsäure, Eisen(III)-chlorid, Aluminiumchlorid, Bortrifluorid, Zinkchlorid und unter den Reaktionsbedingungen feste saure Katalysatoren wie säureaktivierte Bleicherde, Kaolin, saure Zeolithe, sulfonierte Kohle und sulfoniertes Styrol-Divinylbenzol-Mischpolymerisat. Beispiele für basische Katalysatoren sind Alkalihydroxide, insbesondere Kalium-und Cäsiumhydroxid, Alkalialkoholate, quaternäre Ammoniumhydroxide, wie Tetramethylammoniumhydroxid, Benzyltrimethylammoniumhydroxid, Benzyltriethylammoniumhydroxid, Benzyltrimethylammoniumbutylat, beta-Hydroxyethyltrimethylammonium-2-ethylhexoat, quaternäre Phosphoniumhydroxide, wie Tetra-n-butylphosphoniumhydroxid und Tri-n-butyl-3-[tris-(trimethylsiloxy)silyl]-n-propyl-phosphoniumhydroxid, Alkalisiloxanolate und Ammoniumorganosiloxanolate wie Benzyltrimethylammoniummethylsiloxanolat. Diese Katalysatoren werden vorzugsweise in Mengen von 0,01 bis 1 Gew.-%, bezogen auf das Gewicht der zu polymerisierenden bzw. zu kondensierenden Organosiliciumverbindung, eingesetzt.

Die durchschnittliche Viskosität der bei dem erfindungsgemäßen Verfahren eingesetzten, gegebenenfalls bereits Triorganosiloxygruppen aufweisenden Diorganopolysiloxane beträgt vorzugsweise $1.10^2$ bis $5.10^7$ mPa.s bei 25 °C.

Vorzugsweise enthalten die Reste R in den oben angegebenen Formeln höchstens 1 bis 18 Kohlenstoffatom(e) je Rest. Beispiele für Kohlenwasserstoffreste R sind Alkylreste, wie der Methyl-, Ethyl-, n-Propyl-, Isopropyl-, n-Butyl-und sec.-Butylrest sowie Octadecylreste; aliphatische Reste mit Kohlenstoff-Kohlenstoff-Doppelbindung, wie der Vinyl-und Allylrest; Arylreste, wie der Phenylrest und Xenylreste; Alkarylreste, wie Tolylreste; und Aralkylreste, wie der Benzylrest.

Beispiele für substituierte Kohlenwasserstoffreste R sind Halogenalkylreste, wie der 3,3,3-Trifluorpropylrest; Halogenarylreste, wie o-, p-und m-Chlorphenylreste; und Cyanalkylreste, wie der $\beta$-Cyanethylrest. Wegen der leichteren Zugänglichkeit sind vorzugsweise mindestens 50 % der Anzahl der Reste R Methylreste. Die zusätzlich zu den Methylresten vorhandenen Reste R sind meist Vinyl-und/oder Phenylreste.

Das bei dem erfindungsgemäßen Verfahren eingesetzte Hexaorganodisilazan ist vorzugsweise solches der Formel

$$[R_3^1 Si]_2NH ,$$

wobei $R^1$ gleiche oder verschiedene, einwertige, gegebenenfalls substituierte Kohlenwasserstoffreste bedeutet. Vorzugsweise enthalten auch die Reste $R^1$ höchstens 1 bis 18 Kohlenstoffatom(e) je Rest. Alle Beispiele für die Reste R gelten auch für die Reste $R^1$.

Besonders bevorzugt als Hexaorganodisilazan ist 1,3-Divinyl-1,1,3,3-tetramethyldisilazan. Ein wichtiges bei dem erfindungsgemäßen Verfahren einsetzbares Hexaorganodisilazan ist auch Hexamethyldisilazan.

Hexaorganodisilazan wird in Mengen von 0,05 bis 2 Gew.-%, vorzugsweise in Mengen von 0,2 bis 1 Gew.-%, bezogen auf das Gewicht der jeweils eingesetzten Menge an Diorganopolysiloxan, verwendet.

Bei den Phosphornitridchloriden, die die Umsetzung restlicher Si-gebundener Hydroxylgruppen in den erfindungsgemäß eingesetzten Diorganopolysiloxanen zu Triorganosiloxygruppen mittels Hexaorganodisilazan katalysieren, kann es sich um beliebige, bisher als Äquilibrierungs-und Kondensationskatalysatoren bekannte Phosphornitridchloride handeln. Es können z.B. solche sein, die durch Umsetzung von 400 Gew.-Tl. Phosphorpentachlorid mit 130 Gew.-Tl. Ammoniumchlorid hergestellt wurden (vgl. z.B. "Berichte der Deutschen Chemischen Gesellschaft", 57. Jahrgang 1924, S. 1345) oder solche sein, die durch Umsetzung von 2 Mol Phosphorpentachlorid mit 1 Mol Ammoniumchlorid erhältlich sind (vgl. z.B. US 3 839 388, ausgegeben 1. Oktober 1974, S. Nitzsche et al., Wacker-Chemie GmbH). Selbstverständlich können auch Gemische aus mindestens zwei verschiedenen Arten von Phosphornitridchloriden verwendet werden.

Phosphornitridchlorid wird vorzugsweise in Mengen von 5 bis 100 Gew.-ppm, insbesondere 20 bis 80 Gew.-ppm, jeweils bezogen auf das Gewicht der jeweils eingesetzten Menge an Diorganopolysiloxan, verwendet.

Die Zeit zwischen Zugabe von Hexaorganodisilazan zum Diorganopolysiloxan und Zugabe vom Phosphornitridchlorid beträgt vorzugsweise 2 bis 10 Minuten, und die Umsetzung ist nach 20 bis 120 Minuten beendet.

Dem Diorganopolysiloxan werden wenn überhaupt Füllstoffe mit einer BET-Oberfläche von mindestens 50m²/g zugefügt, vorzugsweise in Mengen von höchstens 1 Gew.-%, bezogen auf das Gewicht des eingesetzten Diorganopolysiloxans.

Die bei dem erfindungsgemäßen Verfahren angewendete Temperatur beträgt vorzugsweise 20° bis 200°C, insbesondere 100° bis 150°C.

Vorzugsweise wird das erfindungsgemäße Verfahren beim Druck der umgebenden Atmosphäre, also bei 1020 hPa (abs.) oder etwa 1020 hPa (abs.) durchgeführt, es kann aber auch bei höheren oder niedrigeren Drücken durchgeführt werden.

Das erfindungsgemäße Verfahren kann absatzweise, halbkontinuierlich oder vollkontinuierlich durchgeführt werden. Vorzugsweise wird es vollkontinuierlich durchgeführt.

Der bei der Umsetzung von Si-gebundenen Hydroxylgruppen mit Hexaorganodisilazan zu Triorganosiloxygruppen gebildete Ammoniak macht das als Katalysator für diese Umsetzung verwendete Phosphornitridchlorid unwirksam.

Die erfindungsgemäß hergestellten Diorganopolysiloxane mit Triorganosiloxygruppen als endständigen Einheiten können für alle Zwecke verwendet werden,für die auch bisher Diorganopolysiloxane mit Triorganosiloxygruppen als endständige Einheiten eingesetzt werden konnten, z.B. als Fadengleitmittel, zur Herstellung von Organopolysiloxanelastomeren, die durch Radikalbildner oder durch Anlagerung von SiC-gebundenen Vinylgruppen an Si-gebundenen Wasserstoff vernetzt sind, und zur Herstellung von klebrigen Stoffen abweisenden Überzügen.

Das im folgenden Beispiel verwendete Phosphornitridchlorid wurde hergestellt wie folgt:

Ein Gemisch aus 417 g (2 Mol) Phosphorpentachlorid und 53,3 g (1 Mol) Ammoniumchlorid in 1000 ml Tetrachlorethan wird 12 Stunden zum Sieden unter Rückfluß erwärmt. Aus der so erhaltenen hellgelben Lösung werden bei 160°C und unter Erniedrigung des Drucks bis auf etwa 1,33 hPa (abs.) die flüchtigen Anteile entfernt. Als Rückstand verbleiben gelbliche Kristalle, die im wesentlichen aus der Verbindung der Formel

$$Cl_3PNPCl_2NPCl_3.PCl_6$$

bestehen.

Beispiel

a) Ein Gemisch aus 300g Octamethylcyclotetrasiloxan und 2g durch Trimethylsiloxygruppen endblockiertes Dimethylpolysiloxan mit 65 Siloxaneinheiten je Molekül und 0,2ml Benzyltrimethy-lammoniumsiloxanolat (hergestellt aus Benzyltrime-thylammoniumhydroxid und Octamethylcyclotetra-siloxan) wird in einem Labor-kneter bei 80°C 45 Minuten geknetet. Anschließend wird der Katalysator durch 20 Minuten Kneten bei 180°C und einem Druck von 10 hPa unwirksam gemacht. Das so erhaltene Produkt hat einen im Brabender-Plastograph bei 25°C und 60 Umdrehungen je Minute bestimmten Wert von 5500 Nm.

b) Eine Probe des unter a) erhaltenen Produkts wird mit 1 Gew.-%, bezogen auf das Gewicht dieser Probe, eines Gemisches aus gleichen Gewichtsteilen Di-n-butylzinndilaurat und Tetra-(methoxyethylenoxy)-silikat vermischt. Nach dem Stehenlassen des so erhaltenen Gemisches über Nacht bei Raumtemperatur hat sich daraus ein Elastomer gebildet. Dies beweist, daß in der Probe noch Si-gebundene Hydroxylgruppen vorhanden waren.

c) In 300 g des Produktes, dessen Herstellung oben unter a) beschrieben wurde, werden bei 150°C zunächst 2 g Hexamethyldisilazan und 5 Minuten später 60 Gew.-ppm Phosphornitridchlorid in Form einer 25 Gew.-%-igen Lösung in 1,2,3-Trichlorpropan eingeknetet. Das Gemisch wird dann 1 Stunde bei 150°C weiter geknetet. Die oben unter b) beschriebene Prüfung verläuft negativ, d.h. das so erhaltene Dimethylpolysiloxan mit Trimethylsiloxygruppen als endständigen Einheiten ist frei von Si-gebundenen Hydroxylgruppen. Das nachbehandelte Dimethylpolysiloxan hat denselben im Brabender-Plastograph bestimmten Wert, wie den vor der Nachbehandlung oben unter a) ange-gebenen. Die mittels Gelpermeation-schromatographie bestimmte Molekulargewichts-verteilung des nachbehandelten Dimethylpolysilo-xans ist gegenüber der des unbehandelten Dimethylpolysiloxans, dessen Herstellung unter a) beschrieben ist, unverändert.

Vergleichsbeispiel

Zum Vergleich wird die oben unter c) beschriebene Arbeitsweise wiederholt mit der Abänderung, daß in 300 g des Produktes, dessen Herstellung oben unter a) beschrieben wird, bei 150°C 2 g Hexamethyldisilazan aber anschließend kein Phosphornitridchlorid eingeknetet wird. Das Gemisch wird dann eine Stunde bei 150°C weiter geknetet. Die oben unter b) beschriebene Prüfung verläuft positiv, d.h. ohne Phosphornitridchloridzugabe sind in dem so erhaltenen Dimethylpolysiloxan unverändert Si-gebundene Hydroxylgruppen vorhanden.

## Ansprüche

1. Verfahren zur Herstellung von Diorganopolysiloxanen mit Triorganosiloxygruppen als endständigen Einheiten aus gegebenenfalls bereits Triorganosiloxygruppen aufweisenden Diorganopolysiloxanen und Hexaorganodisilazan in Gegenwart von Phosphornitridchlorid, dadurch gekennzeichnet, daß die gegebenenfalls bereits Triorganosiloxygruppen aufweisenden Diorganopolysiloxane, nach dem sie durch Kondensation und/oder Äquilibrierung in Gegenwart von anderen Katalysatoren als Phosphornitridchlorid die gewünschte durchschnittliche Viskosität erreicht haben, mit Hexaorganodisilazan in Mengen von 0,05 bis 2 Gewichtsprozent, bezogen auf das Gewicht der jeweils eingesetzten Menge an Diorganopolysiloxan, vermischt werden und nach diesem Vermischen als Katalysator für die Umsetzung Phosphornitridchlorid zugegeben wird.

2. Verfahren nach Anspruch 1, dadurch gekennzeichnet, daß als Hexaorganodisilazan 1,3-Divinyl-1,1,3,3-tetramethyldisilazan verwendet wird.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP-A-0 208 285 (WACKER) <br> * ganzes Dokument * & DE - A - 3 524 484 (Kat. D) <br> --- | 1,2 | C 08 G 77/38 <br> C 08 G 77/06 |
| P,A | EP-A-0 249 960 (WACKER) <br> * Zusammenfassung; Seite 3, Zeilen 19-21; Beispiele 1-4 ; Ansprüche 1, 5 * <br> --- | 1 | |
| A | DE-A-2 030 936 (WACKER) <br> * Beispiele; Anspruch 1 * <br> ----- | 1 | |

**RECHERCHIERTE SACHGEBIETE (Int. Cl.4)**

C 08 G 77/00

Der vorliegende Recherchenbericht wurde für alle Patentansprüche erstellt

| Recherchenort | Abschlußdatum der Recherche | Prüfer |
|---|---|---|
| BERLIN | 22-06-1988 | HOEPFNER W.W.G. |